# DEMANDE DE BREVET EUROPEEN

(11) **EP 2 177 398 A1**
(43) Date de publication de la demande: **21.04.2010**
(21) Numéro de dépôt: 09172414.6
(22) Date de dépôt: 07.10.2009
(51) Int. Cl.: B60Q 1/00

(54) **Feu de signalisation arrière pour véhicule automobile**

(30) Priorité: 15.10.2008 FR 0856972
(71) Demandeur: Peugeot Citroën Automobiles SA, 78140 Vélizy-Villacoublay (FR)
(72) Inventeur: Duval, Thomas, 91330, YERRES (FR)
(74) Mandataire: Vigand, Régis Louis Michel

(57) **Abrégé**

Feu de signalisation notamment arrière pour véhicule, en particulier automobile, du type comprenant au moins un boîtier (4) fixé à la carrosserie du véhicule dans lequel est logée au moins une source lumineuse, des moyens d'alimentation électrique de la source lumineuse comprenant un connecteur (10) fixe relativement au boîtier 4 à l'extérieur de ce dernier et qui est connecté à un premier faisceau (9) de fils électriques issu de l'habitacle et à au moins un deuxième faisceau (6) de fils électriques relié à la source lumineuse, **caractérisé en ce qu**'il comprend un moyen de maintien (14) solidaire du boîtier (4) situé en-dessous du connecteur (10) et permettant de maintenir le premier faisceau de façon que ce dernier décrive une boucle en forme de U (15) dirigée vers le bas avant son entrée dans le connecteur (10).

## Description

La présente invention concerne le domaine des feux de signalisation notamment arrière des véhicules automobiles.

Elle est relative à un boîtier de feu de signalisation solidaire de la carrosserie d'un véhicule, et en particulier à la disposition relativement au boîtier du faisceau de fils électriques provenant de l'habitacle du véhicule et alimentant les sources lumineuses de ce boîtier.

Un tel faisceau est relié à un connecteur électrique qui est relié aux sources lumineuses par l'intermédiaire d'un autre faisceau de fils électriques dit faisceau de feu.

Dans l'état de la technique, le faisceau issu de l'habitacle est monté libre entre la carrosserie et le boîtier dans lequel sont montées les sources lumineuses. Cette disposition libre du faisceau issu de l'habitacle présente les inconvénients suivants.

Comme le faisceau issu de l'habitacle est relié au connecteur, une mauvaise position de ce faisceau peut entraîner des entrées d'eau dans le connecteur. En effet, lorsque le faisceau issu de l'habitacle se situe au-dessus du connecteur, il peut former une boucle dirigée vers le haut de sorte que l'eau peut couler le long du faisceau par capillarité et entrer dans le connecteur.

De plus, le faisceau libre issu de l'habitacle peut vibrer et générer des nuisances sonores en touchant une partie de carrosserie du véhicule telle qu'une gouttière d'aile. En outre, lors du montage du boîtier sur la carrosserie du véhicule, notamment la gouttière d'aile, le faisceau issu de l'habitacle peut se coincer entre le boîtier et la carrosserie rendant difficile le montage du boîtier de feu arrière et pouvant occasionner une détérioration du faisceau de fils électriques. Par ailleurs, le faisceau dit de feu qui est également monté libre entre la carrosserie et le boîtier du feu arrière du véhicule peut de la même façon que le faisceau issu de l'habitacle se coincer entre la carrosserie et le boîtier, et entraîner des nuisances sonores par vibrations.

La présente invention a notamment pour but de remédier aux inconvénients ci-dessus.

A cet effet, l'invention a pour objet un feu de signalisation notamment arrière pour véhicule, en particulier automobile, du type comprenant au moins un boîtier fixé à la carrosserie du véhicule dans lequel est logée au moins une source lumineuse, des moyens d'alimentation électrique de la source lumineuse comprenant un connecteur fixe relativement au boîtier à l'extérieur de ce dernier et qui est connecté à un premier faisceau de fils électriques issu de l'habitacle et à au moins un deuxième faisceau, et dans lequel un moyen de maintien solidaire du boîtier est situé en-dessous du connecteur et permet de maintenir le premier faisceau de façon que ce dernier décrive une boucle en forme de U dirigée vers le bas avant son entrée dans le connecteur.

Le moyen de maintien enserre l'une des branches reliée au connecteur de la boucle en U du premier faisceau. Avantageusement, il enserre à distance le deuxième faisceau du premier faisceau.

Le moyen de maintien est de type à pince de fixation faisant saillie du boîtier. Il comprend deux pattes parallèles flexibles. Les bords intérieurs des deux pattes délimitent au moins deux espaces permettant d'insérer par écartement des deux pattes dans un premier espace le premier faisceau, et dans un deuxième espace le deuxième faisceau. Au moins deux paires de bossages disposées en regard sur les deux pattes délimitent les premier et deuxième espaces de retenue des premier et deuxième faisceaux. Les pattes comportent deux parties droites parallèles partant extérieurement de la paroi du boîtier pour délimiter entre elles le deuxième espace d'une largeur inférieure à celle du premier espace délimité au voisinage des parties d'extrémités des deux pattes. Les bossages d'extrémité des deux pattes définissent une partie évasée d'introduction des faisceaux à l'intérieur du moyen de maintien.

Un moyen de support et d'amenée du premier faisceau à proximité du connecteur est fixé à la carrosserie du véhicule et est situé au-dessus du moyen de maintien.

Le moyen de maintien vient de moulage avec le boîtier.

Le connecteur électrique est solidaire du boîtier.

L'invention concerne également un boîtier pour feu de signalisation de véhicule, notamment automobile, comprenant un moyen de maintien tel que défini précédemment et qui est intégralement moulé avec le boîtier et un véhicule, en particulier automobile, comprenant au moins un feu de signalisation tel que défini précédemment.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 représente une vue en perspective de la partie arrière d'un feu de signalisation arrière d'un véhicule automobile conforme à l'art antérieur ;
- la figure 2 représente une vue agrandie d'un connecteur et des faisceaux de fils électriques alimentant des sources lumineuses du feu de signalisation arrière de la figure 1;
- la figure 3 représente une vue du dispositif selon l'invention équipé d'un moyen de maintien des faisceaux de fils électriques alimentant les sources lumineuses d'un feu de signalisation ;
- la figure 4 représente une vue en coupe agrandie du moyen de maintien suivant la ligne IV-IV de la figure 3.
- la figure 5 représente une partie d'un moule pour réaliser le moyen de maintien de la figure 4.
- la figure 6 représente le moyen de maintien réalisé dans le moule de la figure 5.

Sur les différentes figures, les mêmes références désignent des éléments identiques ou similaires.

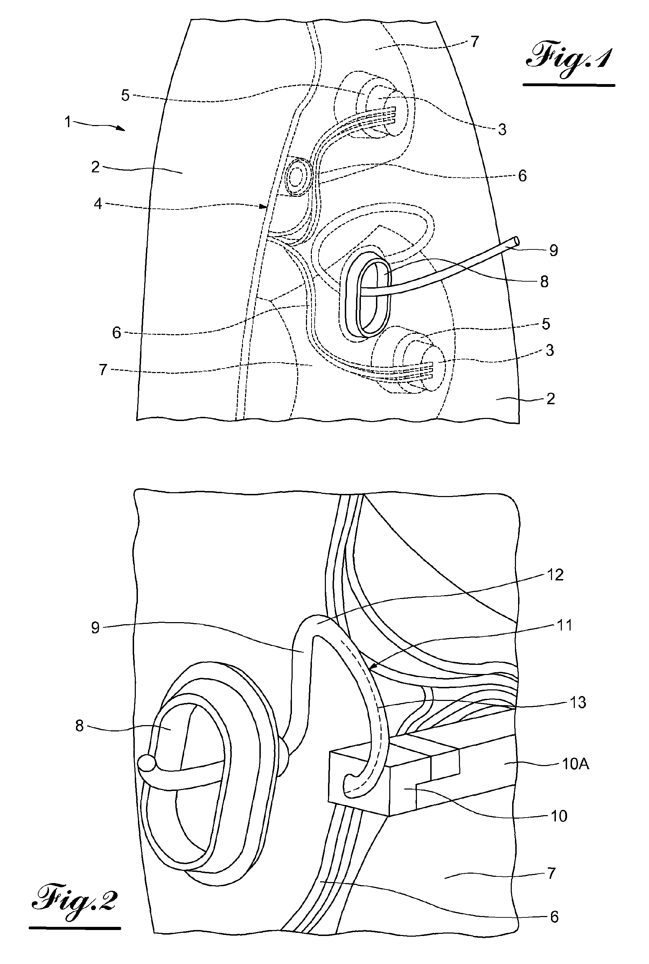

La figure 1 représente une vue en perspective de la partie arrière 1 d'un feu de signalisation arrière d'un véhicule automobile monté sur une partie de carrosserie d'un véhicule telle qu'une gouttière d'aile 2 selon l'état de la technique mentionné en début de description.

Deux sources lumineuses non représentées sont logées de façon amovible par leurs culots respectifs dans deux douilles 3 fixées dans un boîtier de feu 4. Elles sont alimentées chacune par un faisceau de fils électriques dit faisceau de feu 6. Le boîtier 4 est fixé à la gouttière d'aile 2 par des moyens de fixation connus non représentés tels que des vis et comporte dans le cas présent deux parois bombées 7 de support des deux sources lumineuses et faisant office de réflecteurs des flux lumineux provenant de ces sources.

La gouttière d'aile 2 est dessinée en filigrane, et comprend un moyen de support et d'amenée 8 d'un faisceau de fils électriques 9 issu de l'habitacle à proximité de l'une des parois 7 du boîtier 4, celle située par exemple en partie inférieure de la figure 1.

Comme représenté en figure 2, un connecteur 10 est relié d'une part au faisceau 9 issu de l'habitacle, nommé par la suite premier faisceau 9, et d'autre part au faisceau dit de feu 6 connecté deux sources lumineuses, nommé par la suite deuxième faisceau 6. Le connecteur 10 est fixé sur le boîtier 4 à l'extérieur de celui-ci, par exemple par l'intermédiaire d'un manchon 10A.

Le moyen de support et d'amenée 8 du premier faisceau 9 vers le connecteur 10 est situé au-dessus du connecteur 10 sur la gouttière d'aile 2. La gouttière d'aile 2 n'est pas dessinée sur la figure 2 par souci de simplification.

Le premier faisceau 9 traverse le moyen de support et d'amenée 8, et entre dans l'espace entre la gouttière d'aile 2 et le connecteur 10. Comme le premier faisceau 9 est monté libre entre le moyen de support 8 et le connecteur 10, il est susceptible de décrire une boucle en forme sensiblement de U renversé 11, c'est-à-dire que la base ou sommet 12 du U renversé 11 est au-dessus des deux branches 13 orientées sensiblement verticalement vers le bas du U renversé. La disposition du premier faisceau 9 en forme de U renversé peut générer des écoulements d'eau le long des branches du U renversé, et en particulier le long de la branche reliée au connecteur 10 entre le sommet du U renversé et le connecteur 10. De la sorte, de l'eau peut pénétrer dans le connecteur 10 pouvant occasionner des courts-circuits.

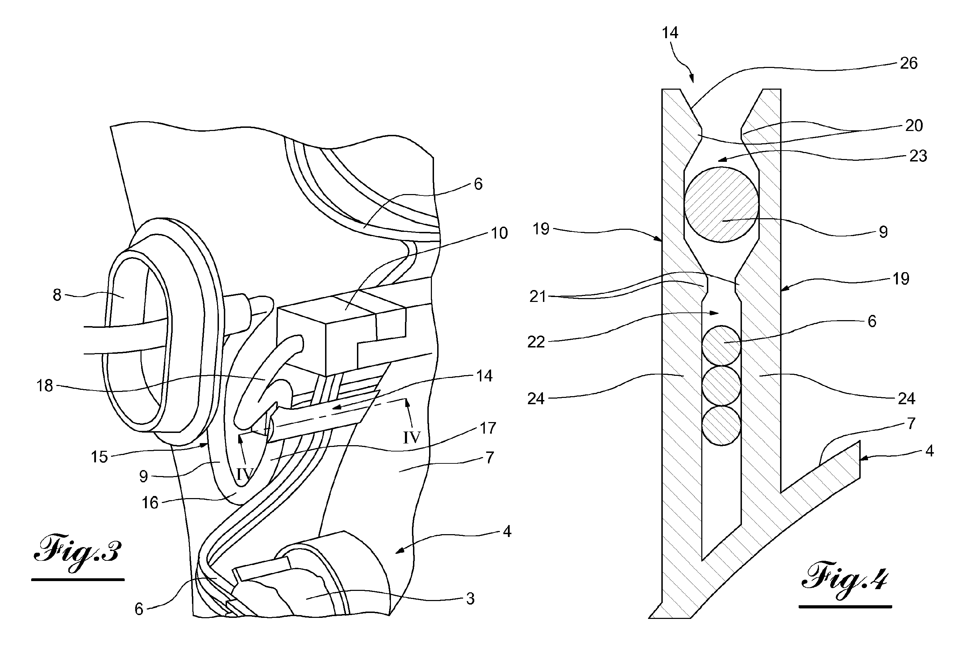

Les figures 3 et 4 représentent le dispositif selon l'invention équipé d'un moyen de maintien 14 des faisceaux de fils électriques permettant d'empêcher l'entrée d'eau dans le connecteur 10 de la figure 2.

Le moyen de maintien 14 est solidaire de l'une des parois 7 du boîtier 4 en faisant saillie extérieurement de cette paroi 7 qui peut être celle située en partie inférieure du boîtier 4. De préférence, le moyen de maintien 14 vient de moulage avec le boîtier 4.

Le connecteur 10 est situé au-dessus du moyen de maintien 14, et de préférence le moyen de support et d'amenée 8 du faisceau est également situé au-dessus du moyen de maintien 14. La disposition du moyen de maintien 14 en-dessous du connecteur 10 permet d'insérer dans le moyen de maintien le premier faisceau 9 et le deuxième faisceau 6 préalablement reliés au connecteur 10. En outre, la disposition du moyen de maintien 14 vis-à-vis du moyen de support 8 et du connecteur 10, et la longueur du premier faisceau 9 sortant du moyen de support 8 supérieure à la distance entre ce moyen 8 et le moyen de maintien 14, permettent au premier faisceau 9 d'être fixé au moyen de maintien 14 de manière que le premier faisceau 9 décrive une boucle 15 en forme sensiblement de U dirigée vers le bas avant son entrée dans le connecteur 10, dont la base 16 est en-dessous des branches 17.

Le moyen de maintien 14 enserre l'une des branches 17 de la boucle 15 en U opposée à l'autre branche située du côté du moyen de support 8.

Dans la variante de réalisation représentée en figure 3, il peut être envisagé pour le premier faisceau 9, une seconde boucle 18 en U dirigée vers le bas et située au-dessus du moyen de maintien 14 et avant l'entrée du premier faisceau 9 dans le connecteur 10, mais la branche enserrée par le moyen de maintien 14 et sortant au-dessus de ce moyen peut être reliée directement au connecteur 10 sans décrire de boucle.

La figure 4 montre de façon détaillée que le moyen de maintien 14 est du type à pince de bridage comprenant deux pattes parallèles 19 solidaires de la paroi 7 et orientées sensiblement et de façon non limitative parallèlement à l'axe optique du réflecteur correspondant à la paroi 7 du boîtier 4. Les deux pattes parallèles 19 sont disposées suivant une largeur déterminée et une longueur à partir de la paroi 7 du boîtier 4 pour permettre l'insertion et le maintien des faisceaux de fils électriques 6, 9 à une certaine distance l'un de l'autre dans la pince 14. Elles présentent entre elles deux paires de bossages 20, 21 disposées en regard sur les deux pattes 19 et délimitant le long des pattes 19 des premier et deuxième espaces de retenue 22 et 23 dans lesquels sont insérés les premier et deuxième faisceaux 6 et 9.

Chaque patte 19 comporte une partie droite ou rectiligne 24 partant extérieurement de la paroi 7 du boîtier de feu 4 pour délimiter entre elles le deuxième espace 22 d'une largeur inférieure à celle du premier espace 23 délimité au voisinage des parties d'extrémités des deux pattes 19 entre les deux paries de bossages consécutives. Les bossages d'extrémité 20 des deux pattes 19 définissent une partie d'extrémité évasée 26 facilitant l'introduction des faisceaux à l'intérieur de la pince 14.

Les deux pattes 19 sont flexibles, c'est-à-dire déformables élastiquement. Elles sont réalisées lors du moulage du boîtier 4 et sont constituées en un matériau plastique.

Les deux pattes 19 de la pince de bridage 14 permettent d'enserrer élastiquement dans les deux espaces 22 et 23 les deux faisceaux 6 et 9.

L'opération de bridage des faisceaux 6, 9 aux pattes de maintien 19 s'effectue par le monteur sur la ligne de production au moment d'assembler le feu arrière sur la carrosserie du véhicule Ainsi, le monteur insère par écartement des deux pattes 19, dans un premier temps, le deuxième faisceau 6 qu'il dispose dans le deuxième espace 22, puis dans un deuxième temps, le premier faisceau 9 qu'il dispose dans le premier espace 23 pour configurer le premier faisceau 9 en une boucle en U dirigée vers le bas garantissant une étanchéité du connecteur 10.

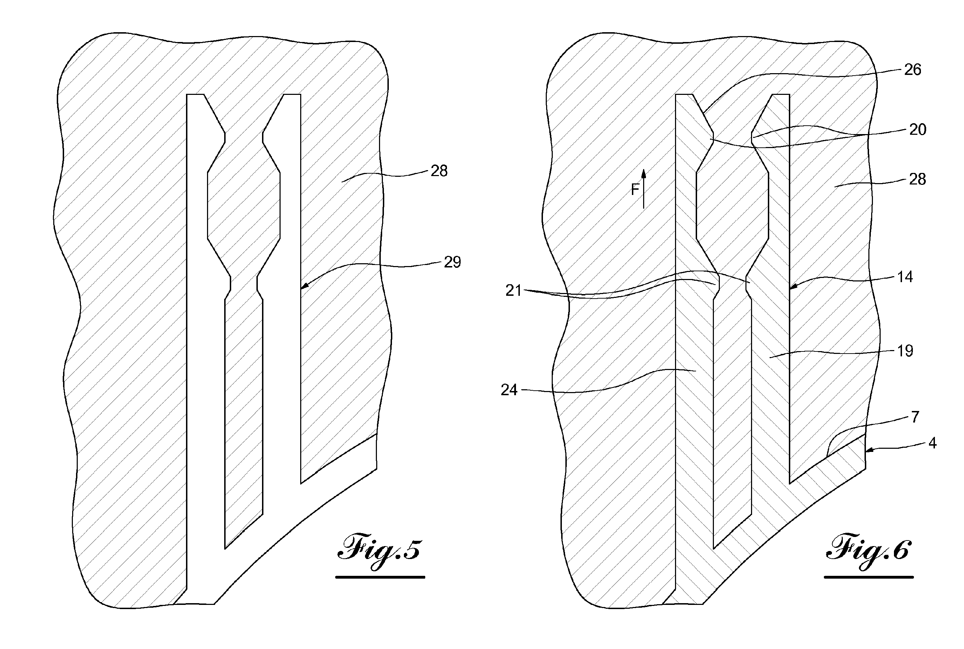

La figure 5 représente la partie mobile 28 et l'empreinte 29 du moule pour réaliser la pince 14, l'empreinte 29 du moule présentant les contours extérieurs des deux pattes 19 de la pince 14.

La figure 6 représente la pince 14 réalisée dans le moule permettant de réaliser également le boîtier 4.

A titre d'exemple de fabrication, la pince de bridage 14 est réalisée par injection de matière plastique fondue dans l'empreinte du moule en acier. Elle se démoule par déplacement de la partie mobile du moule suivant l'axe de démoulage du boîtier 4 symbolisé par la flèche F en figure 6. Au moment de l'éjection de la partie mobile, la matière plastique de la pince 14 étant encore chaude, les bossages 20, 21 de la pince 14 sont arrondis par le déplacement de la partie mobile 28 du moule et son contact sur la pince 14, ce qui permet d'éviter des bavures pouvant endommager les faisceaux lors de leur introduction dans la pince 14.

Ainsi, la pince de bridage permet de donner au faisceau issu de l'habitacle la forme d'une boucle en U dirigée vers le bas avant son entrée dans le connecteur, et de tenir efficacement le faisceau issu de l'habitacle et le faisceau issu du feu en les pinçant.

La pince de bridage permet d'éviter les écoulements d'eau le long de la branche du faisceau issu de l'habitacle vers le connecteur, ce qui renforce l'étanchéité du connecteur.

En outre, en fixant les faisceaux par la pince de bridage, on empêche les faisceaux de vibrer, évitant de créer des nuisances sonores lors du déplacement du véhicule.

Le montage de ces faisceaux dans la pince de bridage évite un glissement des faisceaux entre le boîtier de feu et la gouttière d'aile, ce qui coincerait et endommagerait les faisceaux avec de surcroît une difficulté de monter le feu arrière à l'aile.

On notera que seul le premier faisceau issu de l'habitacle peut être fixé au boîtier par le moyen de maintien. Lorsque le second faisceau est fixé par le moyen de maintien, le problème d'infiltration d'eau dans le connecteur ne se pose pas puisque ce faisceau est relié au connecteur en s'étendant en-dessous de ce dernier.

Enfin, la pince de bridage, en maintenant le faisceau de feu, facilite le conditionnement du feu de signalisation puisque les fils issus du faisceau de feu ne peuvent pas se coincer ou s'abîmer dans le bac de conditionnement du feu. En outre, du fait que les faisceaux de feu soient déjà mis en place par le fournisseur, le monteur n'a pas à gérer leur montage.

## Revendications

1. Feu de signalisation notamment arrière pour véhicule, en particulier automobile, du type comprenant au moins un boîtier (4) fixé à la carrosserie du véhicule dans lequel est logée au moins une source lumineuse, des moyens d'alimentation électrique de la source lumineuse comprenant un connecteur (10) fixe relativement au boîtier (4) à l'extérieur de ce dernier et qui est connecté à un premier faisceau (9) de fils électriques issu de l'habitacle et à au moins un deuxième faisceau (6) de fils électriques relié à la source lumineuse, **caractérisé en ce qu'**il comprend un moyen de maintien (14) solidaire du boîtier (4), situé en-dessous du connecteur (10) et permettant de maintenir le premier faisceau de façon que ce dernier décrive une boucle en forme de U (15) dirigée vers le bas avant son entrée dans le connecteur (10).

2. Feu de signalisation selon la revendication 1, **caractérisé en ce que** le moyen de maintien (14) enserre l'une des branches (17) reliée au connecteur (10) de la boucle en U du premier faisceau (9).

3. Feu de signalisation selon l'une des revendications 1, 2, **caractérisé en ce qu'**un moyen de support et d'amenée (8) du premier faisceau (9) à proximité du connecteur (10) est fixé à la carrosserie du véhicule et est situé au-dessus du moyen de maintien (14).

4. Feu de signalisation selon l'une des revendications 2, 3, **caractérisé en ce que** le moyen de maintien (14) enserre à distance du premier faisceau (9) le deuxième faisceau (6).

5. Feu de signalisation selon l'une des revendications 1 à 4, **caractérisé en ce que** le moyen de maintien (14) est de type à pince de fixation faisant saillie du boîtier (4).

6. Feu de signalisation selon la revendication 5, **caractérisé en ce que** la pince (14) comprend deux pattes (19) parallèles flexibles.

7. Feu de signalisation selon la revendication 6, **caractérisé en ce que** les bords intérieurs des deux pattes (19) délimitent au moins deux espaces (22,23) permettant d'insérer par écartement des deux pattes (19) dans un premier espace (22) le premier faisceau (9), et dans un deuxième espace (23) le deuxième faisceau (6).

8. Feu de signalisation selon la revendication 7, **caractérisé en ce qu'**au moins deux paires de bossages (20,21) disposées en regard sur les deux pattes (19) délimitent le premier et deuxième espaces de retenue (22,23) des premier et deuxième faisceaux (6, 9).

9. Feu de signalisation selon les revendications 7, 8, **caractérisé en ce que** les pattes (19) comportent deux parties droites (24) parallèles partant extérieurement de la paroi du boîtier (4) pour délimiter entre elles le deuxième espace (23) d'une largeur inférieure à celle du premier espace (22) délimité au voisinage des parties d'extrémités des deux pattes (19).

10. Feu de signalisation selon la revendication 9, **caractérisé en ce que** les bossages d'extrémité (20) des deux pattes (19) définissent une partie évasée (26) d'introduction des faisceaux (6, 9) à l'intérieur du moyen de maintien (14).

11. Feu de signalisation selon l'une des revendications 1 à 10, **caractérisé en ce que** le moyen de maintien (14) vient de moulage avec le boîtier (4).

12. Feu de signalisation selon l'une quelconque des revendications précédentes 1 à 11, **caractérisé en ce que** le connecteur électrique (10) est solidaire du boîtier (4).

13. Boîtier pour feu de signalisation de véhicule, notamment automobile, **caractérisé en ce qu'**il comprend un moyen de maintien (14) tel que défini dans l'une des revendications 1 à 12 et qui est intégralement moulé avec le boîtier (4).

14. Véhicule, en particulier automobile, comprenant au moins un feu de signalisation selon l'une des revendications 1 à 12.
